Europäisches Patentamt

European Patent Office

Office européen des brevets

(11) Publication number: **0 379 585**
**A1**

## EUROPEAN PATENT APPLICATION
### published in accordance with Art. 158(3) EPC

(21) Application number: 89906473.7

(22) Date of filing: 31.05.89

(86) International application number:
PCT/JP89/00544

(87) International publication number:
WO 89/12296 (14.12.89 89/29)

(51) Int. Cl.⁵: **G11B 7/00, G11B 7/007,**
**G11B 7/24, G11B 20/12**

(30) Priority: 31.05.88 JP 133286/88

(43) Date of publication of application:
**01.08.90 Bulletin 90/31**

(84) Designated Contracting States:
**DE FR GB**

(71) Applicant: **Matsushita Electric Industrial Co.,**
**Ltd.**
**1006, Oaza Kadoma**
**Kadoma-shi Osaka-fu, 571(JP)**

(72) Inventor: **IMANAKA, Ryoichi**
**2-6, Misaki 3-chome Kuzuha**
**Hirakata-shi Osaka-fu 573(JP)**

(74) Representative: **Votier, Sidney David et al**
**CARPMAELS & RANSFORD 43, Bloomsbury**
**Square**
**London WC1A 2RA(GB)**

(54) **RECORDABLE OPTICAL DISC.**

(57) A recordable optical disc capable of optically recording the data. The disc has, as a pre-pit, a pit (4a) of a rugged pattern that corresponds to a synchronized signal portion recorded on the reproduction-only optical disc in the form of pits of rugged pattern. The region sandwiched by the pre-pits (4a) serves as a region for recording data (6a) supplementarily. Therefore, the recordable optical disc can be reproduced using a player for reproduction-only optical disc, enabling the two discs to be interchangeable.

FIG. I

- 1 -

SPECIFICATION

TITLE OF THE INVENTION

RECORDABLE OPTICAL DISC

TECHNICAL FIELD

The present invention relates to optical discs on which information can be optically recorded and which have compatibility with reproducing-only disc.


BACKGROUND ART

In recent years, optical discs for optically recording/reproducing information thereon have been developed as recording media having large capacity for recording information. Those optical discs of such a type are classified into two groups, namely, recordable optical discs (postscript type) on which information can be posteriorly recorded after the discs are produced, and reproducing-only discs on which all information are beforehand recorded in the form of uneven patterns of pits when the discs are produced and on which any information cannot be posteriorly recorded after the discs have been produced.

A recordable optical disc is such that signals can be recorded/reproduced onto/from the disc by using a semiconductor laser onto a recording layer of, for example, tellurium oxide represented by $TeO_x$ ($0 < x < 2$), and the signals are recorded in the form of a light and shade pattern as changes in reflectivity. Pregrooves forming recording tracks are preliminarily provided in the optical disc in order to raise the recording density and to facilitate recording and reproducing, and signals are recorded and reproduced on the pregrooves.

On the other hand, a reproducing-only disc is such that signals have been recorded in the form of fine uneven patterns called pits in recording tracks.

Therefore, there has been a proposal of preliminarily defining the respective heights or depths of the pregrooves and signal pits to make it possible to reproduce recorded signals from both the recordable optical disc and reproducing-only optical disc commonly by one and the same reproducing apparatus to thereby attain compatibility between the two discs (JP-A-60-242530).

In general, however, reproducing apparatus for reproducing signal from a reproducing-only optical disc have no function for reproducing signal from a recordable optical disc provided with pregrooves. Accordingly, a specifically designed reproducing apparatus capable of reproducing signal from both a recordable optical disc and a reproducing-only optical disc is required.

The present invention has been attained to solve the conventional problem that such a special reproducing apparatus is required, and, it is therefore an object of the present invention to provide a recordable disc which has no pregroove and which has compatibility with a reproducing-only disc so that signal of a recordable disc can be reproduced even by a reproducing apparatus for reproducing signal from a reproducing-only disc.

DISCLOSURE OF INVENTION

To attain the foregoing object of the present invention, in the recordable optical disc in accordance with the present invention, a portion corresponding to a synchronizing signal portion of a reproducing-only optical disc is provided as an uneven pattern of pits, so that at the time of signal recording, the uneven pits are detected to perform positioning of a recording laser beam and information is recorded in portions between the uneven pits. At the time of signal reproduction, both the synchronizing signal in the form of the above-mentioned uneven patterns of pits and the posteriorly recorded information are reproduced so that one perfect signal track is reproduced.

Because the recordable optical disc has no pregroove as described above, the recordable disc having posteriorly recorded signals can be reproduced by a reproducing apparatus provided for reproducing-only discs.

BRIEF DESCRIPTION OF DRAWINGS

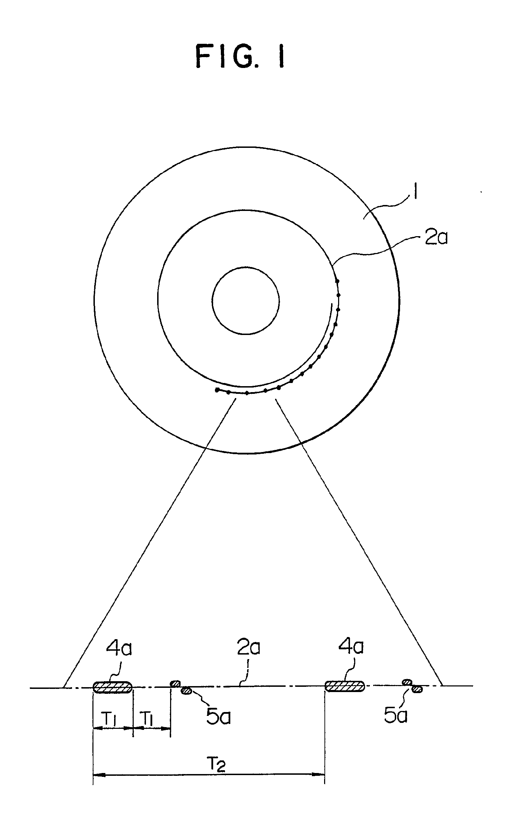

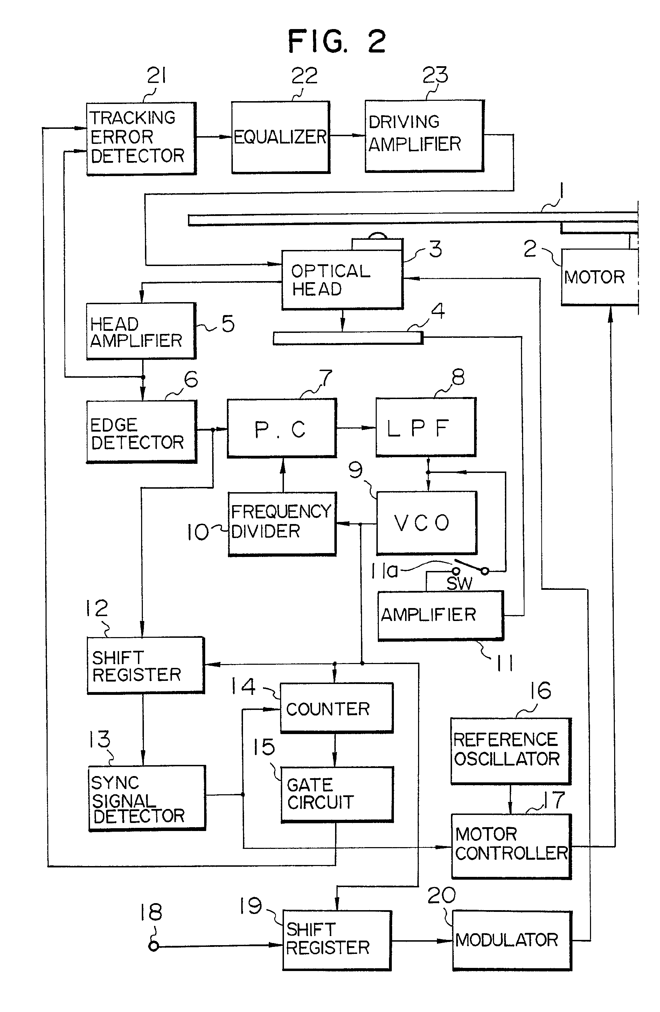

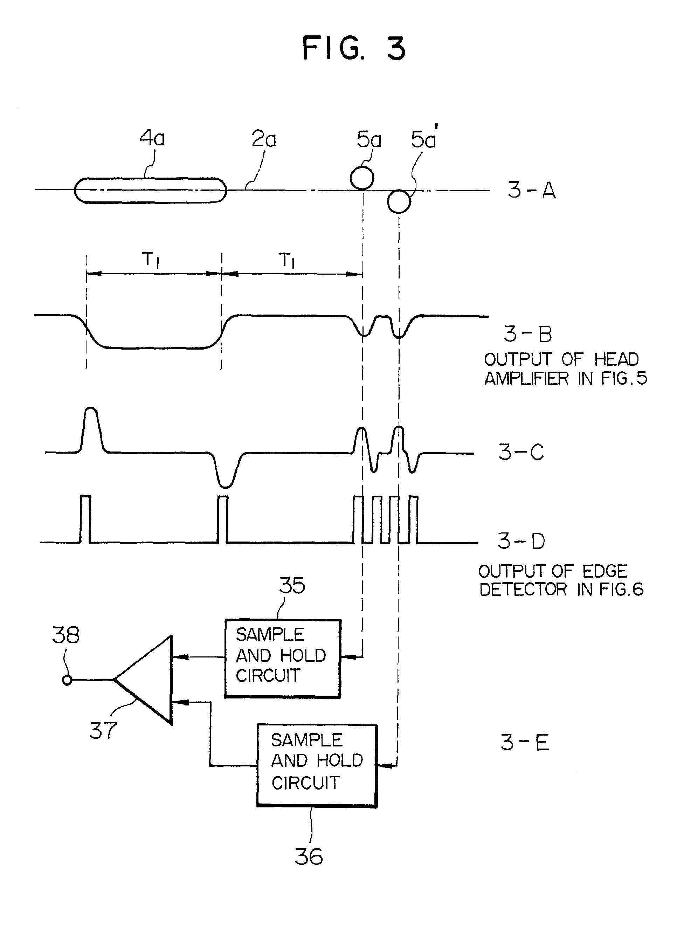

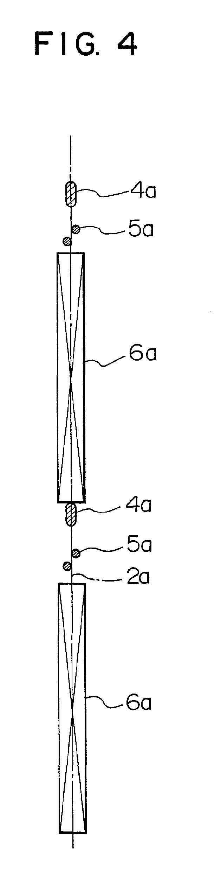

Fig. 1 is a plan view of an embodiment of the recordable optical disc according to the present invention; Fig. 2 is a block diagram of a recording/ reproducing apparatus for the disc; Fig. 3 is a waveform diagram showing the operation of the apparatus of Fig. 2; and Fig. 4 is a plan view showing a part of a track of the optical disc of Fig. 1 on which information signals have been posteriorly recorded.

BEST MODE FOR CARRYING OUT THE INVENTION

In Fig. 1 the reference nuemral 1 designates a recordable optical disc (hereinafter simply referred to as "optical disc") which has synchronizing signal pits 4a and tracking pits 5a on each track central line 2a as shown in the enlarged view of the track. The tracking pits 5a are disposed symmetrically with respect to the track central line 2a in the radial direction of the optical disc. The width of each synchronizing signal pit 4a is represented by $T_1$ and the period of the pits is represented by $T_2$.

Fig. 2 is a block diagram of an embodiment of a recording/reproducing apparatus. In Fig. 2, the optical disc 1 is driven to rotate by a motor 2. The reference numeral 3 designates an optical head which has a recording/reproducing semiconductor laser and a tracking system (both of which are not shown). The reference numeral 4 designates a position detector for indicating, as a voltage value, the radial position of the optical head 3 with respect to the optical disc 1. The reference nuemral 5 designates a head amplifier for amplifying the reproduced output of the optical head 3.

The reference nuemral 6 designates an edge detector for detecting the edge positions of the synchronizing signal pits 4a and the tracking pits 5a shown in Fig. 1.

The reference numeral 7 designates a phase comparator which detects the phase difference between the output of a frequency divider 10 and the output of the edge detector 6 so as to control the oscillation frequency of a voltage-controlled oscillator (VCO) 9 through a low-pass filter (LPF) 8. The reference numeral 11 designates an amplifier for converting the output of the phase detector 4 into a voltage value which is added to the control voltage terminal of the VCO 9 only when a switch (SW) 11a is in an on-state. The SW 11a is turned on when the optical disc 1 is of a CLV (constant relative velocity) type. The reference numeral 12 designates a shift register which is supplied with the output of the edge detector 6 on the basis of its clock input which is the output of the VCO 9 so that the synchronizing signal portion is detected by a synchronizing signal detector 13 from the parallel outputs of the shift register 12 the detection pulses of which are supplied to a counter 14. Receiving the output of the VCO 9, the counter 14 supplies a gate circuit 15 with pulses synchronized with the detection output of the tracking pits 5a in Fig. 1 on the basis of the output of the synchronizing signal detector 13 so that a tracking error detector 21 is supplied with the pulses for sampling.

The reference numeral 16 designates a reference oscillator. The output of the synchronizing signal detector 13 is fed to a motor controller 17 so that the rotation of the motor 2 is controlled in synchronism with the output of the reference oscillator 16. The reference numeral 18 designates an information signal input terminal through which information signals are fed to the shift register 19. The information signals are converted into signals synchronized with the output signal of the VCO 9, and the converted signals are fed to a modulator 20 to modulate semiconductor laser light of the optical head 3 so that the information signals are recorded on the optical disc 1.

The reference numeral 22 designates an equalizer and 23 designates a driving amplifier for driving the tracking system of the optical head 3 so as to make the output laser light of the optical head 3 follow the track central line on the optical disc 1.

Recording of information signals is performed by increasing the power of output laser light of the optical head 3 and tracking is performed by detecting the tracking pits.

In the following, the operation of recording and tracking is described with reference to Figs. 3 and 4.

In Fig. 3, 3A shows the same view as the enlarged track view shown in the lower portion of Fig. 1;

Fig. 3B shows the output of the head amplifier 5 in the case where signals shown in the track view are reproduced by the optical head 3; and Fig. 3D shows the output of the edge detector 6. The width $T_1$ and period $T_2$ of the synchronizing signal pits are established to have values which do not exist in other portions of the optical disc 1, so that the synchronizing signal pits can be detected by using the synchronizing signal detector 13 from the output of the edge detector 6 under the condition that the output of the VCO 9 synchronized with the output of the edge detector 6 is fed as a clock signal to the shift register 12.

In a CLV optical disc, in general, the number of synchronizing signal pits on one circuit of track is relatively small in the inner track while relatively large in the outer track. Accordingly, when the number of revolution of the optical disc 1 is made equally fixed both in its inner and outer track portions, it is necessary to control the frequency of the VCO 9 to be different between in the inner and outer track portions. In this case, however, the frequency of the VCO 9 may be out of synchronization with the output of the edge detector 6. In this embodiment, therefore, the switch (SW) 11a can be turned on to correct the frequency of the VCO 9 based on the output of the position detector 4 to thereby enlarge the pull in range of the VCO 9. The pulse signal indicating the positions of the tracking pits 5a and 5a' in Fig. 3 can be obtained from the output of the gate circuit 15 by supplying the output of the synchronizing signal detector 13 together with the output of the VCO 9 to the counter 14 and the gate circuit 15. Accordingly, the output of the gate circuit 15 is supplied to sample and hold circuits 35 and 36 to sample and hold the signals modulated with the tracking pits 5a and 5a' of the output of the head amplifier 5, and a difference between the respective output signals of the sample and hold circuits 35 and 36 is obtained by using a differential amplifier 37 so that a tracking error signal 38 can be obtained. This signal is shown as the output of the tracking error detector 21 in Fig. 2. When the output laser beam of the optical head 3 is biased to the tracking pits 5a with respect to the tracking central lin 2a, the output of the sample and hold circuit 35 becomes large, while the output laser beam is, on the contrary, biased to the tracking pits 5a', the output of the sample and hold circuit 36 becomes large, so that the tracking error signal is obtained in the output 38 of the differential amplifier 37.

Fig. 4 shows a condition in which information signals have been recorded between the synchronizing signal pits and the tracking pits. As shown in the drawing, the synchronizing signal pit 4a is detected and then the information signals are posteriorly recorded just after the tracking pits 5a. There is a case where posteriorly recording information signals are recorded in the form of changes of reflectivity on the optical disc and another case where they are recorded as physical changes of holes or the like on the optical disc, so that the information signals may be different in polarity from the reproduced signals of the synchronizing signal pits and tracking pits at the time of reproducing depending on the recording system. Accordingly, it is necessary to make the information signals accord in polarity with the reproduced signals of the synchronizing signal pits and tracking pits at the time of recording. That is, in the case where positive reproduced signals appear when positive pulses are recorded, it is necessary to modulate the semiconductor laser light reversely in polarity to the synchronizing pits and tracking pits.

Although the aforementioned embodiment block diagram has shown the case where only the oscillation frequency of the VCO is controlled on the basis of the output 11 of the position detector, the output of the position detector may be fed to the motor controller 17 so that the number of revolution of the motor 2 is made smaller and larger in the outer and inner track portions of the optical disc, respectively, in a case of CLV.

It is further desirable that the reflectivity and the degree of modulation in the posteriorly recorded information signal portions are equal to those in the synchronizing signal pits and tracking pits performed on the disk as possible, respectively.

It is therefore preferable that reflection film other than recording film is provided on the optical disc in advance to give the optical disc having both the reflectivity and the degree of modulation equal to those of the reproducing-only disc.

Further, the wavelength of posteriorly recording laser light may be stablished to be different from the wavelength of reproducing laser light so that the reflectance of the optical disc and the absorptance of the light beam are made to be small and large respectively in the case where information signals are recorded on the optical disc while the reflectance of the optical disc is made to be large at the time of reproduction to obtain large reproduced signals. This can be realized by establishing the thickness of the recording film and the thickness of the reflection film of the optical disc to be suitable values respectively.

INDUSTRIAL APPLICABILITY

As described above, in accordance with the present invention, the synchronizing signal pits and tracking pits are provided in the optical disc in advance and the information signal portions are posteriorly recorded, so that pregrooves can be disused to make it possible to attain compatibility with reproducing-only discs.

Further, the wavelength of laser light at the

- 11 -

time of posterior recording can be set to be different from the wavelength of laser light at the time of reproduction so that the reproduction output is made large at the time of reproduction while the absorptance of the light is made large at the time of posterior recording to thereby facilitate the recording and reproducing operations.

As described above, the compatibility of the recordable optical disc with reproducing-only discs can be attained with no specific limitation of the optical system of the recording/reproducing apparatus, so that a great convenience will be given to general users.

12

List of Reference Numerals in the Drawings

1 .......... Optical Disc

2a ........ Central Line

4a ........ Synchronizing Signal Pits

5a ........ Tracking Pits

CLAIMS

1.      A recordable optical disc for optically recording input information by modulating laser light in accordance with the input information to be recorded, characterized in that said recordable optical disc has uneven patterns of pits as prepits corresponding to synchronizing signal portions recorded in the form of uneven patterns of pits in a reproducing-only optical disc, so that areas sandwiched between said prepits are made to be areas in which said input information is to be posteriorly recorded.

2.      A recordable optical disc according to Claim 1, characterized in that said input information is recorded by means of laser light having a wavelength of $\lambda_1$ and in that the recorded information is reproduced by means of laser light having a wavelength of $\lambda_2$ ($\lambda_1 \neq \lambda_2$).

3.      A recordable optical disc according to Claim 2, characterized in that the reflectivity with respect to the laser light having the wavelength of $\lambda_1$ is less than the reflectivity with respect to the laser light having the wavelength of $\lambda_2$.

# FIG. I

4a    2a    4a

T₁  T₁    5a    5a

T₂

# FIG. 2

# FIG. 3

3 - A

$T_1$ $T_1$

3 - B
OUTPUT OF HEAD
AMPLIFIER IN FIG.5

3 - C

3 - D
OUTPUT OF EDGE
DETECTOR IN FIG.6

35

38

SAMPLE
AND HOLD
CIRCUIT

37

SAMPLE
AND HOLD
CIRCUIT

3 - E

36

4a  2a  5a  5a'

# FIG. 4

# INTERNATIONAL SEARCH REPORT

International Application No PCT/JP89/00544

## I. CLASSIFICATION OF SUBJECT MATTER (if several classification symbols apply, indicate all).[6]

According to International Patent Classification (IPC) or to both National Classification and IPC

Int. Cl[4]   G11B7/00, 7/007, 7/24, 20/12

## II. FIELDS SEARCHED

| Minimum Documentation Searched [7] | |
|---|---|
| Classification System | Classification Symbols |
| IPC | G11B7/00, 7/007, 7/24, 20/12 |

| Documentation Searched other than Minimum Documentation to the Extent that such Documents are Included in the Fields Searched [8] |
|---|
| Jitsuyo Shinan Koho          1970 - 1989 <br> Kokai Jitsuyo Shinan Koho     1971 - 1989 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| Y | JP, A, 62-208432 (Hitachi, Ltd.) <br> 12 September 1987 (12. 09. 87) <br> Page 2, upper left column, line 16 to <br> lower left column, line 5 <br> (Family : none) | 1 - 3 |
| Y | JP, A, 63-53777 (Sony Corporation) <br> 8 March 1988 (08. 03. 88) <br> Explanation of page 2, upper left column, <br> line 17 to lower left column, line 11, <br> Fig. 1 (Family : none) | 1 - 3 |
| Y | JP, A, 63-37992 (Matsushita Electric Ind. <br> Co., Ltd.) <br> 18 February 1988 (18. 02. 88) <br> Page 2, lower left column, line 1 to <br> page 3, lower left column, line 8 <br> (Family : none) | 2, 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 9, 1989 (09. 08. 89) | August 28, 1989 (28. 08. 89) |

| International Searching Authority | Signature of Authorized Officer |
|---|---|
| Japanese Patent Office | |

Form PCT/ISA/210 (second sheet) (January 1985)